# EUROPEAN PATENT SPECIFICATION

(11) **EP 3 086 425 B1**
(45) Date of publication and mention of the grant of the patent: **23.06.2021**
(21) Application number: 16164683.1
(22) Date of filing: 11.04.2016
(51) Int. Cl.: H02G 3/18

(54) **ELECTRICAL ASSEMBLY FOR FLUSH-MOUNTED INSTALLATION IN A WALL**
ELEKTRISCHE ANORDNUNG ZUM OBERFLÄCHENEINBAU IN EINER WAND
ENSEMBLE ÉLECTRIQUE POUR INSTALLATION ENCASTRÉE DANS UNE PAROI

(30) Priority: 21.04.2015 BE 201505258
(43) Date of publication of application: 26.10.2016
(73) Proprietor: Niko NV, 9100 Sint-Niklaas (BE)
(72) Inventor: Totté, Lieven, 9140 Elversele (BE); Verheule, Gert Marcel, 2627 Schelle (BE); Van Parijs, Frank, 2500 Lier - Koningshooikt (BE); Tiels, Koen Reinout Roeland, 9100 Sint-Niklaas (BE); Devenyn, Diederik Jozef Luc, 9820 Merelbeke (BE); Heyndrickx, Wim Ferdinand Madeleine, 2070 Zwijndrecht (BE)
(74) Representative: D'Halleweyn, Nele Veerle Trees Gertrudis

(56) References cited:
- EP-A1- 2 523 273
- WO-A1-2008/023102
- DE-A1-102011 001 469
- DE-A1-102011 111 969
- US-A1- 2010 231 165
- US-A1- 2012 262 006
- US-A1- 2014 132 084

## Description

### Field of Invention

The invention relates to an electrical assembly for flush-mounted installation in a wall for facilitating and/or controlling and/or measuring the provision of power to an electrical load such as an electrical appliance, a light, a fan, a heater, a blind, etc.

### Background

An electrical assembly for flush-mounted installation in a wall, such as a socket assembly, a switch assembly, a dimmer assembly, etc. typically comprises a base and a cover. The base is provided with the electrical function, such as a socket function (including the socket busses), a switch function (including a relay), a dimmer function (including dimmer circuitry). The cover typically comprises a central member (also called central plate or finishing set) and a cover frame (also called flush surround plate) extending around the central member. The cover is visible from the outside whilst the base is built-in and not visible when the cover is provided.

When smart functionalities have to be added to the electrical assembly, existing electrical assemblies typically comprise a PCB with electronic circuitry attached to the back of the base.

US 2014/132084 discloses a controllable electrical receptacle. The electrical receptacle includes a housing having a pair of sockets suitable for receiving electrical plugs. The receptacle includes an antenna disposed beneath the cover portion of the receptacle. The receptacle includes a housing having a first portion, and a second portion. The first portion may be removably coupled to the second portion. The first and second portions enclose and protect the components of the receptacle, including a middle portion. Supported at the back side of the middle portion, are first and second printed circuit boards.

WO 2008/023102 A1 discloses an installation mechanism comprising a housing enclosing electrical connection elements, and electrical equipment that includes such an installation mechanism. Said housing includes a base, a cover with one front wall provided with openings for access to the electrical connection elements, side walls that border said front wall, and at least one tooth for hooking to a support mechanism which protrudes outward from the housing and which is borne by a flex tab extending substantially in the plane of one of the side walls, attached to said cover by an attachment end. The electrical connection elements are programmable electronic elements positioned on a printed circuit, and their programming is performed by successive presses of keys which are formed by tabs cut in the front wall of the cover. The electrical connection elements emerge from the front wall through the access openings, so that they can be accessed via one or more control buttons attached to the wall front of the hood of the equipment mechanism. The equipment mechanism is arranged to be mounted from the rear of the equipment support.

### Summary

The object of the present invention is to provide a base and an electrical assembly in which smart functionalities may be included in an improved manner resulting in a more compact assembly with a limited built-in depth.

According to the invention, there is provided a base for flush-mounted installation in a wall, for facilitating, controlling, or measuring the provision of power to an electrical load. The base comprises an electrical function and is intended for being at least partially built-in in an opening in the wall. The base comprises a rear base part with a rear side and a front side, and a front base part with a rear side and a front side. The front side of the rear base part is attached to a rear side of the front base part. The rear base part is provided with first electronic circuitry connected to the electrical function, and the front base part is provided with second electronic circuitry which is connected to the first electronic circuitry. The second electronic circuitry is arranged on a PCB, said PCB being arranged between the front base part and the rear base part. The first electronic circuitry is arranged on a PCB, said PCB being attached to the rear side of the rear base part. The electrical function comprises a relay arranged in a recess provided in the rear side of the rear base part.

According to a second aspect, there is provided an electrical assembly for flush-mounted installation in a wall, for facilitating, controlling, or measuring the provision of power to an electrical load. The electrical assembly comprises a base according to the invention, and a cover. The cover is configured for being attached to said base and for covering the opening in the wall. The rear side of the rear base part faces away from the cover and the front side of the rear base part is being attached to the rear side of the front base part. The front side of the front base part faces towards said cover.

By providing a base with multiple parts and by splitting the electronic circuitry into first and second electronic circuitry divided over a front base part and a rear base part, a more compact electrical assembly may be provided. Further, by providing the front base part with second electronic circuitry, a part of the circuitry that needs to be connected to an antenna can be brought further forward resulting in better reception compared to a case where the antenna has to be connected to circuitry arranged at the rear side of the base.

Further, a relay is typically a relatively large component. By locating the relay in such a recess, the built-in depth of the electrical assembly may be further limited. The recess may be a through-hole extending from the rear side to the front side of the rear base part.

Optionally, a part or all of the electrical function is arranged on the PCB attached to the rear side of the rear base part. Said PCB may comprise circuitry on both sides, e.g. the relay on a first side and a power conversion circuitry on the other side.

In the context of the present invention the term "wall" may refer to a side wall, a ceiling or a floor.

In the context of the present invention, the term "electrical assembly" refers to an assembly suitable for placement in a fixed location in the building and configured for facilitating or controlling the provision of power to a load in the wall, or for measuring the power provided to the load. In the context of the present invention, an electrical assembly may be an assembly for e.g. any one of the following: a switch, in particular a light switch; a socket; a dimmer; a fan actuator; a blind or curtain actuator, a thermostat, an RGB controller, an RGBW controller. Typically the assembly is intended and configured for being mounted at least partially in an opening in the wall where the electrical function is connected to electrical wires present in the wall. Typically, the electrical wires in the wall comprise wires connected to the mains, and optionally wires for connecting the electrical function with a load such as a light, a fan engine, etc. However, in other embodiments the electrical wires in the wall may comprise wires connected to a DC power source. More generally the wires in the wall may be connected to any AC or DC power source.

In the context of the present invention "the front base part being provided with second electronic circuitry" has to be interpreted broadly in the sense that the second electronic circuitry could be arranged against the front side of the rear base part whilst being covered by the front base part. According to the invention the circuitry is split in first and second electronic circuitry wherein the second circuitry is arranged more to the front and the first circuitry is arranged more to the rear.

According to the invention, the second electronic circuitry is arranged in a recess provided in the rear side of the front base part. By providing the circuitry in a recess, it can be well protected from damage. The second electronic circuitry may also be arranged between the rear side of the front base part and the front side of the rear base part.

In a preferred embodiment, the first electronic circuitry comprises power conversion circuitry configured for converting a first voltage present on wires into the wall into a lower second voltage for feeding components of the first and/or second circuitry. Preferably, the second electronic circuitry is low voltage circuitry which is fed by the lower second voltage.

In a preferred embodiment, the second electronic circuitry comprises a microcontroller and communication circuitry connected to an antenna. The antenna may be arranged at a small distance from the second electronic circuitry, e.g. in or against the front base part, in or against the cover, or near the cover. In that manner both the communication circuitry and the antenna can be positioned close to the cover, in order to achieve a very good RF performance of the electrical assembly. The microcontroller is configured for processing data received by the communication circuitry and for configuring or operating the electrical function accordingly, and/or for wirelessly sending data via said communication circuitry to a mobile device and/or to another electrical assembly and/or to a gateway, etc. The term "mobile device" may refer to any mobile device such as a smart phone, a smart watch, a tablet, a mobile computer, a proprietary remote control device, etc.

In a preferred embodiment, the microcontroller of the second electronic circuitry is connected to the relay for controlling the operation of the relay.

In a preferred embodiment, the first and/or second electronic circuitry comprises measurement circuitry configured for measuring a measure representative for the power consumed by a load connected to the electrical function of the electrical assembly. Preferably, the measurement circuitry is connected to the microcontroller and the microcontroller is configured to communicate said measure via the communication circuitry. If the measurement circuitry comprises a low voltage measurement IC, this measurement IC may be part of the second circuitry, and there may be provided a connection between the first circuitry and the second circuitry to transfer a measure, e.g. voltage over a shunt resistor, representative for the power to the measurement IC.

In an exemplary embodiment the electrical assembly further comprises interface means connected to the second circuitry, said interface means being accessible through said cover. In that way the interface means are operable by a user, or visible to a user, or can sense the environment outside the cover. The interface means may comprise any one or more of the following: input means such as a button for operating the relay of the electrical assembly, or a sensor, e.g. a light sensor; output means such as a display for displaying e.g. the power consumption, a LED. Also, the interface means may be connected to the PCB on which the second circuitry is arranged.

In a preferred embodiment, the electrical function is configured for being directly connected, in the wall, to electrical wires present in the wall. The electrical function may comprise any one of the following: a switch function (comprising the relay), in particular a light switch; a socket function (comprising contact busses); a dimmer function (comprising dimmer circuitry); a fan actuator function; a blind or curtain actuator function, a thermostat function. When the electrical function comprises a controllable switch function (comprising the relay), the microcontroller of the second circuitry may be configured to control the controllable switch.

In a preferred embodiment, the cover comprises a cover frame and a central member, said cover frame being fixable to said base around said central member. Typically, the central member is any one of the following: a central member for a socket outlet, a pivotable switch plate, a push button, a rotatable button. In further developed embodiments, the cover may comprise a touch screen or a touch button. Optionally the cover frame may be omitted, e.g. if the touch screen or the touch button are integrated in a housing extending over the entire opening in the wall.

In an exemplary embodiment, the communication circuitry of the second electronic circuitry comprises a communication module configured to operate in a spectrum range above 1.5 GHz; and/or a communication module configured to operate in a spectrum range below 1.5 GHz. The lower frequencies have a better penetration through concrete and steel compared to the higher range of the first communication module, and has a longer range for a given output power. Hence, the communication module configured to operate in a spectrum range below 1.5 GHz may be used to communicate with other electrical assemblies or with a gateway in the building. The higher frequencies may be used to communicate with a mobile device.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 illustrates an exploded perspective view looking from the front to the back of a first exemplary embodiment of an electrical assembly of the invention;
Figure 2 illustrates an exploded perspective view looking from the back to the front of the first exemplary embodiment of an electrical assembly of the invention;
Figures 3A and 3B are respective views of the assembly in the mounted position with and without a plug inserted in the socket outlet;
Figure 4 is a detailed perspective view of components 10, 20, 30 and 40 of the first exemplary embodiment, looking from front to back;
Figure 5 is a detailed perspective view of components 10, 20, 30 and 40 of the first exemplary embodiment, looking from back to front; and
Figures 6A and 6B are perspective views of the first and second electronic circuitry according to an exemplary embodiment of the invention.

### Description of embodiments

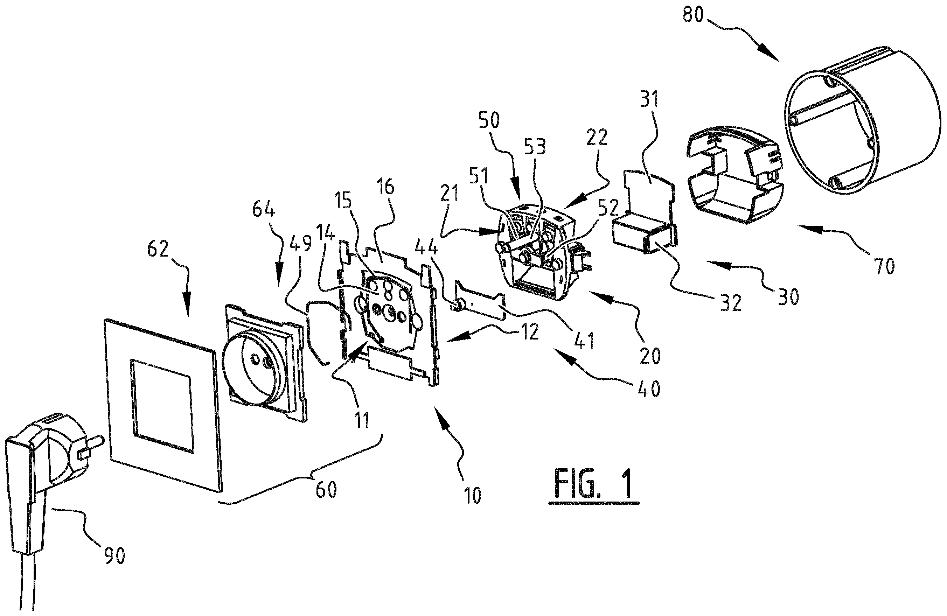

Figures 1, 2, 3A and 3B, 4 and 5 illustrate a first exemplary embodiment of an electrical assembly for flush-mounted installation in a wall. In the first exemplary embodiment, the electrical assembly is a socket assembly for facilitating, controlling and measuring the provision of power to an electrical appliance via a plug 90 inserted in the socket outlet. The assembly is intended to be built-in in an opening in the wall, where the electrical function 50 (the socket function) is connected to electrical wires present in the wall. Typically, the electrical wires in the wall comprise wires connected to the mains.

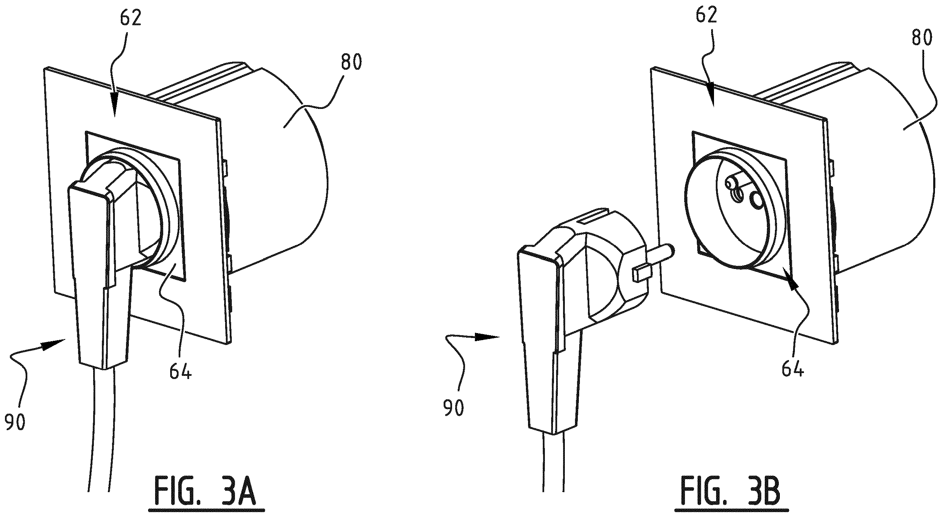

In the first exemplary embodiment, the electrical assembly comprises a multi-part base 10, 20 and the cover 60. The base 10, 20 comprises an electrical function, here a socket function 50 with contact busses. The base 10, 20 is intended and sized for being at least partially built-in in an opening in the wall. To that end, the assembly may further comprise a mounting box 80 which can be placed in the opening in the wall and which is sized and configured for receiving the base 10, 20. The electrical wires present in the wall extend in the mounting box 80 and are connected to contacts 51, 52, 53 of the socket function 50 in the base 10, 20 in a known manner. In the first exemplary embodiment the cover 60 is a multi-part cover configured for being attached to the base 10, 20 and for covering the opening in the wall, see also figures 3A and 3B.

The base comprises a rear base part 20 with a rear side 22 and a front side 21, and a front base part 10 with a rear side 12 and a front side 11. The front base part 10 may comprise a plastic part 14, e.g. an injection moulded part, and a metal frame 16. The metal frame 16 may be provided with a plurality of holes and/or with a plurality of protruding parts for fixation purposes. The rear base part 20 is typically a plastic part, e.g. an injection moulded part. The rear side 22 of the rear base part 20 faces away from the cover 60, and the front side 11 of the front base part 10 faces towards the cover 60. The front side 21 of the rear base part 20 is attached to a rear side 12 of the front base part 10. The rear base part 20 is provided with first electronic circuitry 30. The front base part 10 is provided with second electronic circuitry 40 which is connected to the first electronic circuitry 30.

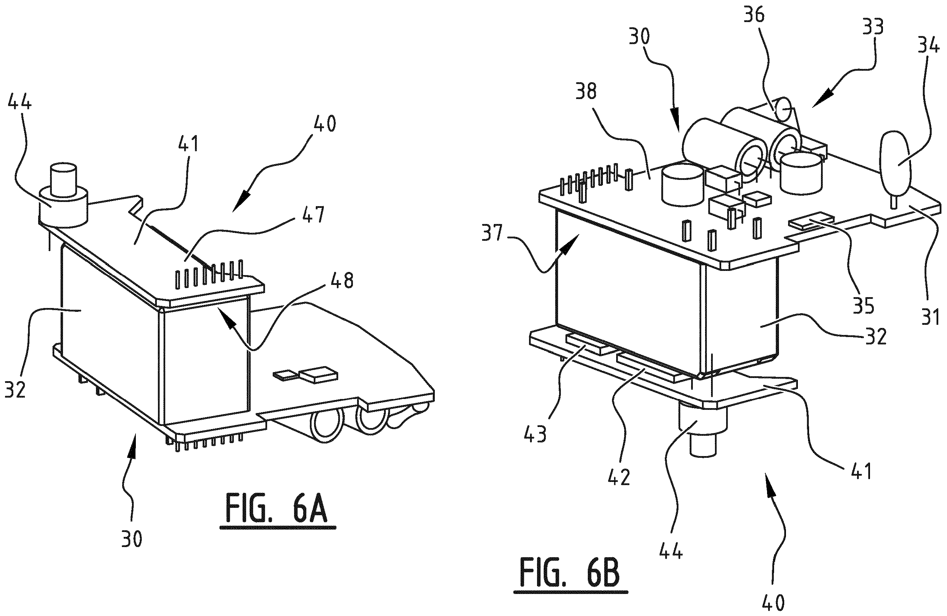

The first and second electronic circuitry 30, 40 is shown in more detail in figures 6A and 6B. The first electronic circuitry 30 comprises a PCB 31 on which a number of electronic components 33, 34, 35, and 36 are mounted and connected. The PCB 31 has a front side 37 arranged against the rear side 22 of the rear base part 20, and a rear side 38. On the front side 37 of PCB 31 there is mounted a relay 32. For accommodating the relay 32, there is provided a recess 23 in the rear side 22 of the rear base part 20. On the rear side 38 of the PCB 31 there are provided power conversion circuitry 33, protection circuitry 34, a shunt resistor 35, and a fuse 36. The first PCB 31 may be protected against damage by a cap 70 which is fixed over the first circuitry 30 to the rear side of the rear base part 20.

The power conversion circuitry 33 is configured for converting a first voltage present on the wires in the wall into a lower second voltage, typically 12 or 24 Volt DC, for feeding low-voltage components of the first and/or second circuitry. In the exemplary embodiment of the figures, the low-voltage components are part of the second circuitry and are arranged on a second PCB 41. The power conversion circuitry 33 typically comprises electrolytic capacitor, an AC/DC convertor, and any other necessary components for connecting the AC/DC convertor. The protection circuitry 34 may be a voltage dependent resistor which provided protection against excessive transient voltages.

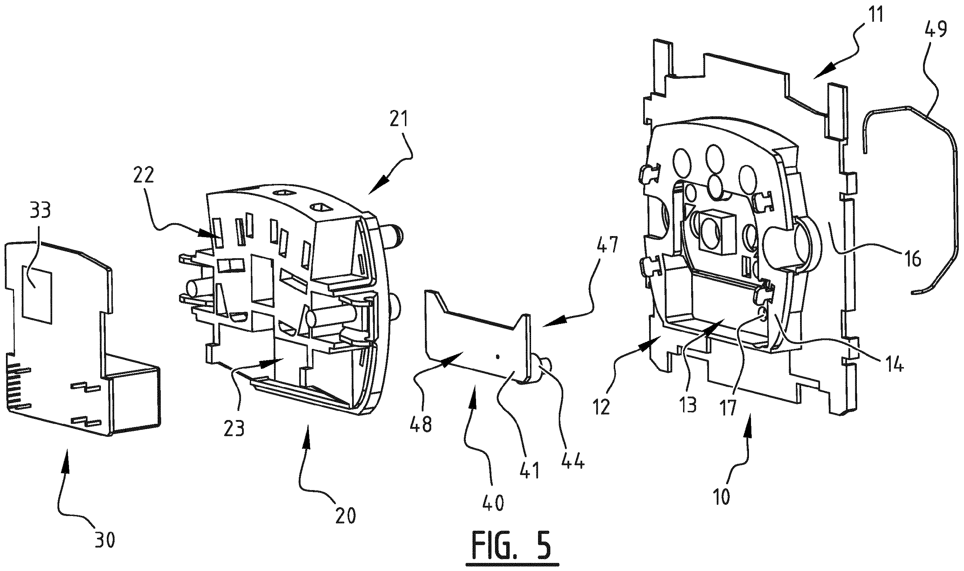

The second PCB 41 is arranged in a recess 13 provided in the rear side 12 of the front base part 10, and more in particular in a recess 13 provided in the plastic part 14 of the front base part 10. The second PCB 41 has a front side 47 and a rear side 48. On the rear side 48 there is provided a microcontroller 42 and communication circuitry 43 (shown in figure 6B but not in figures 1 and 5). The communication circuitry 43 is connected to an antenna 49. The antenna 49 is arranged in a groove 15 provided in a front side 11 of the front base part 10 and extends through a hole 17 to be connected to the communication circuitry 43 on PCB 41. In alternative embodiments the antenna 49 could also be arranged against a rear side of the central member 64, or could be integrated in the central member 64, or could be integrated within the front base part 10, or could be a PCB antenna arranged on PCB 41.

The microcontroller 42 is configured for processing data received by the communication circuitry 43 and for configuring or operating the electrical function 50 accordingly, and/or for wirelessly sending data via the communication circuitry 43 to another electrical assembly, to a gateway, or to a mobile device (not shown). The microcontroller 42 may consist of one control unit or of a plurality of control units. In case of a plurality of control units, the control units may be part of the second circuitry but one or more thereof could also be part of the first circuitry.

In a particular embodiment, the communication circuitry 43 may comprise a first communication module and/or a second communication module. The first communication module may be configured to operate in a spectrum range above 1.5 GHz. This first communication module may be e.g a Bluetooth low energy module configured to operate according to the Bluetooth low energy protocol, also called Bluetooth smart protocol, e.g. as specified in the Bluetooth core specification version 4.0, 4.1 or 4.2. A spectrum range above 1.5 GHz allows for more channels and a small antenna. This first communication module may be used e.g. to communicate with a mobile device. The second communication module may be configured to operate in a spectrum range below 1.5 GHz, e.g. between 800 and 900 MHz. This lower frequency range has a better penetration through concrete and steel compared to the higher range of the first communication module, and has a longer range for a given output power. Hence, the second communication module may be used to communicate with other electrical assemblies in the building.

In addition to the microcontroller 42, there may be provided other components such as a time knowledge module, a data storage, and measurement circuitry on the second PCB 41. Such measurement circuitry is configured for measuring a measure representative for the power consumed by a load connected to the socket outlet of the socket assembly. In an exemplary embodiment, there may be provided a shunt resistor 35 on the first PCB 31, and the voltage over the shunt resistor 35 may be transferred to a measurement IC (not shown) present on the second PCB 41. The measurement IC (not shown) may be provided e.g. on the front side 47 of the PCB 41. The measurement IC is connected to the microcontroller 42, and the microcontroller 42 is configured to communicate this measure via the communication circuitry 43.

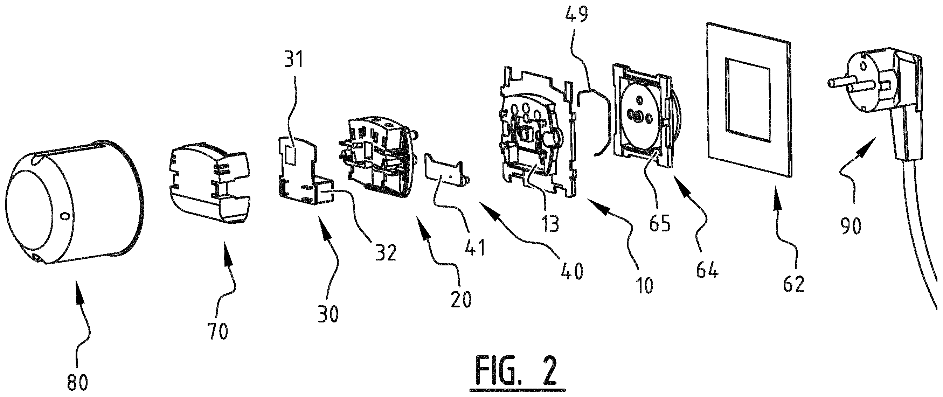

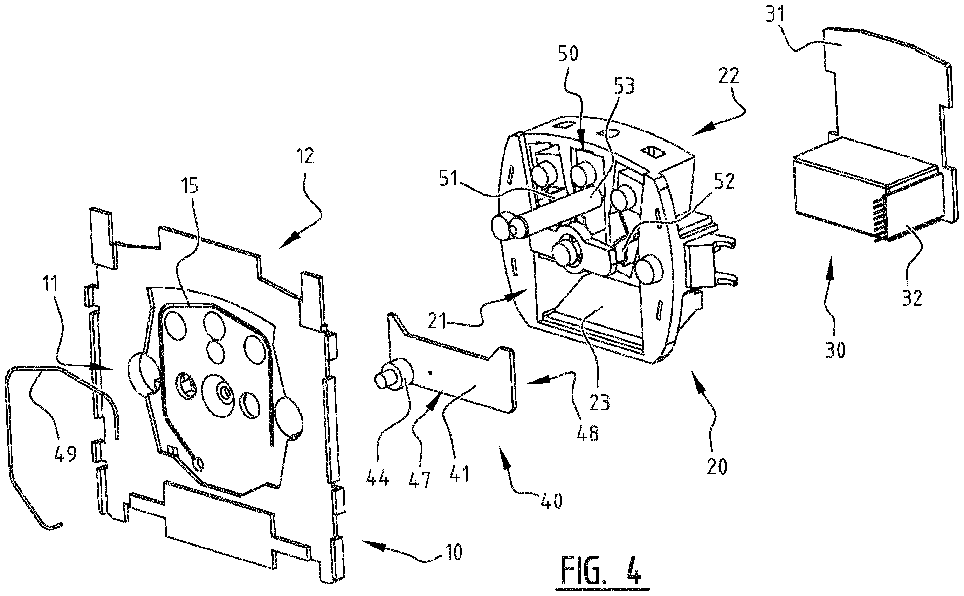

Also, there may be provided a number of interface components, such as an input means, e.g. a sensor, an output means, which are accessible from the front side of the cover 60. In the illustrated embodiment, there is provided a button 44 on PCB 41 which may be manually operated by a user in order to switch the relay 32 manually. The front base part 10 is provided with a hole in which a movable pin 18 is arranged (see figure 4), and the central member 64 is provided with a hole 65 (see figure 2), and the movable pin 18 is accessible through said hole 65 for operating the button 44. More generally the central member 64 may be provided with a through-opening in which an interface means, such as input means (e.g. a mechanical button, a touch button, a sensor, etc.), and/or an output means (e.g. a display, a led, etc.), is arranged or through which an interface means is accessible. Such an interface means may be connected to the PCB 41, and in particular to the microcontroller 42.

The multi-part cover 60 comprises a cover frame 62 and a central member 64. When mounting the assembly, first the multi-part base 10, 20 with the first and second electronic circuitry is arranged in the mounting box 80, and next the central member 64 is fixed to the base 10, 20, whereupon the cover frame 62 is fixed around the central member 64.

Figures 1, 2, 3A, 3B, 4, 5 and 6 have been used to illustrate a first exemplary embodiment of the invention in the form of a socket assembly. The skilled person understands that a similar assembly may be used when the electrical function is a switch function, a dimmer function, a fan actuator function, a blind or curtain actuator function, or a thermostat function, an RGB(W) LED controller function, etc. In case of a switch function, the central cover member may be e.g. a pivotable switch plate or a push button. In case of a dimmer function, the central member may be e.g. a rotatable push button.

The functions of the various elements shown in the figures, including any functional blocks labelled as "units" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

It should be appreciated by those skilled in the art that any block diagrams herein represent conceptual views of illustrative circuitry embodying the principles of the invention.

Whilst the principles of the invention have been set out above in connection with specific embodiments, it is to be understood that this description is merely made by way of example and not as a limitation of the scope of protection which is determined by the appended claims.

## Claims

1. A base (10, 20) for flush-mounted installation in a wall, for facilitating, controlling, or measuring the provision of power to an electrical load, said base (10, 20) comprising an electrical function (50) and being intended for being at least partially built-in in an opening in the wall, wherein said base (10, 20) comprises a rear base part (20) with a rear side (22) and a front side (21), and a front base part (10) with a rear side (12) and a front side (11); the front side (21) of the rear base part (20) being attached to a rear side (12) of said front base part (10);
wherein said rear base part (20) is provided with first electronic circuitry (30) connected to the electrical function (50);
wherein said front base part (10) is provided with second electronic circuitry (40) which is connected to said first electronic circuitry (30);
wherein the second electronic circuitry (40) is arranged on a PCB (41), said PCB (41) being arranged between the front base part (10) and the rear base part (20);
**characterized in that** the first electronic circuitry (30) is arranged on a PCB (31), said PCB (31) being attached to the rear side (22) of the rear base part (20); and
**in that** the electrical function (50) comprises a relay (32) arranged in a recess (23) provided in the rear side (22) of the rear base part (20).

2. The base of claim 1, wherein the second electronic circuitry (40) is arranged in a recess (13) which is provided in the rear side (12) of the front base part (10).

3. The base of claim 1 or 2, wherein the electrical function is a socket function comprising contact busses.

4. The base of any one of the previous claims, wherein the first electronic circuitry comprises power conversion circuitry (33) configured for converting a first voltage present on wires into the wall into a lower second voltage for feeding components of the first and/or second circuitry (30, 40).

5. The base of any one of the previous claims, wherein the second electronic (40) circuitry is low voltage circuitry fed by the lower second voltage.

6. The base of any one of the previous claims, wherein the second electronic circuitry comprises a microcontroller (42) and communication circuitry (43) connected to an antenna, wherein the microcontroller (42) is configured for processing data received by the communication circuitry (43) and for configuring or operating the electrical function (50) accordingly, and/or for wirelessly sending data via said communication circuitry (43) to another electrical assembly and/or to a gateway and/or to a mobile device.

7. The base of any one of the previous claims, wherein said recess is a through-hole extending from the rear side to the front side of the rear base part.

8. The base of any one of the previous claims, wherein the first and/or second electronic circuitry (30, 40) comprises measurement circuitry configured for measuring a measure representative for the power consumed by a load connected to the electrical function of the electrical assembly.

9. The base of claims 7 and 5, wherein the measurement circuitry is connected to the microcontroller (42) and the microcontroller (42) is configured to communicate said measure via the communication circuitry (43).

10. The base of any one of the previous claims, wherein the electrical function (50) comprises any one of the following: a switch function, in particular a light switch; a socket function; a dimmer function; a fan actuator function; a blind or curtain actuator function, a thermostat function, a RGB(W) controller function.

11. An electrical assembly for flush-mounted installation in a wall, for facilitating, controlling, or measuring the provision of power to an electrical load, said electrical assembly comprising a base (10, 20) according to any one of the previous claims, and a cover (60);
wherein the rear side (22) of the rear base part (20) is facing away from said cover (60) and the front side (21) of the rear base part (20) is being attached to the rear side (12) of the front base part (10), the front side (11) of the front base part (10) facing towards said cover (60).

12. The electrical assembly of claim 11, further comprising interface means connected to the second circuitry, said interface means being accessible through said cover (60); wherein the interface means preferably comprises any one or more of the following: input means, such as a button or a sensor; an output means such as a LED or a display; and/or wherein the interface means are connected to the PCB (41) on which the second circuitry is arranged.

13. The electrical assembly of claim 11 or 12, wherein the cover (60) comprises a cover frame (62) and a central member (64), said cover frame (62) being fixeable to said base (10, 20) around said central member (64); wherein said central member is preferably any one of the following: a central member (64) for a socket outlet, a pivotable switch plate, a push button, a rotatable button.

## Patentansprüche

1. Basis (10, 20) zur bündigen Montage in einer Wand zum Erleichtern, Steuern oder Messen der Stromversorgung einer elektrischen Last, wobei die Basis (10, 20) eine elektrische Funktion (50) umfasst und dafür vorgesehen ist, zumindest teilweise in eine Öffnung in der Wand eingebaut zu sein, wobei die Basis (10, 20) einen rückwärtigen Basisteil (20) mit einer Rückseite (22) und einer Vorderseite (21) und einen vorderen Basisteil (10) mit einer Rückseite (12) und einer Vorderseite (11) umfasst;
wobei die Vorderseite (21) des rückwärtigen Basisteils (20) an einer Rückseite (12) des vorderen Basisteils (10) angebracht ist;
wobei der rückwärtige Basisteil (20) mit einer ersten elektronischen Schaltungsanordnung (30) versehen ist, die mit der elektrischen Funktion (50) verbunden ist;
wobei der vordere Basisteil (10) mit einer zweiten elektronischen Schaltungsanordnung (40) versehen ist, die mit der ersten elektronischen Schaltungsanordnung (30) verbunden ist;
wobei die zweite elektronische Schaltungsanordnung (40) auf einer Leiterplatte (41) angeordnet ist, wobei die Leiterplatte (41) zwischen dem vorderen Basisteil (10) und dem rückwärtigen Basisteil (20) angeordnet ist;
**dadurch gekennzeichnet, dass** die erste elektronische Schaltungsanordnung (30) auf einer Leiterplatte (31) angeordnet ist, wobei die Leiterplatte (31) an der Rückseite (22) des rückwärtigen Basisteils (20) angebracht ist; und
**dass** die elektrische Funktion (50) ein Relais (32) umfasst, das in einer Aussparung (23) angeordnet ist, die in der Rückseite (22) des rückwärtigen Basisteils (20) vorgesehen ist.

2. Basis nach Anspruch 1, wobei die zweite elektronische Schaltungsanordnung (40) in einer Aussparung (13) angeordnet ist, die in der Rückseite (12) des vorderen Basisteils (10) vorgesehen ist.

3. Basis nach Anspruch 1 oder 2, wobei die elektrische Funktion eine Buchsenfunktion ist, die Kontaktbusse umfasst.

4. Basis nach einem der vorhergehenden Ansprüche, wobei die erste elektronische Schaltungsanordnung eine Leistungsumwandlungsschaltungsanordnung (33) umfasst, die zum Umwandeln einer auf Drähten in die Wand vorhandenen ersten Spannung in eine niedrigere zweite Spannung zum Einspeisen von Komponenten der ersten und/oder zweiten Schaltungsanordnung (30, 40) konfiguriert ist.

5. Basis nach einem der vorhergehenden Ansprüche, wobei die zweite elektronische Schaltungsanordnung (40) eine Niederspannungsschaltungsanordnung ist, die durch die niedrigere zweite Spannung gespeist wird.

6. Basis nach einem der vorhergehenden Ansprüche, wobei die zweite elektronische Schaltungsanordnung einen Mikrocontroller (42) und eine Kommunikationsschaltungsanordnung (43) umfasst, die mit einer Antenne verbunden sind, wobei der Mikrocontroller (42) zum Verarbeiten von durch die Kommunikationsschaltungsanordnung (43) empfangenen Daten und zum entsprechenden Konfigurieren oder Betreiben der elektrischen Funktion (50) und/oder zum drahtlosen Senden von Daten über die Kommunikationsschaltungsanordnung (43) an eine andere elektrische Baugruppe und/oder an ein Gateway und/oder an ein mobiles Gerät konfiguriert ist.

7. Basis nach einem der vorhergehenden Ansprüche, wobei die Aussparung ein Durchgangsloch ist, das sich von der Rückseite zur Vorderseite des rückwärtigen Basisteils erstreckt.

8. Basis nach einem der vorhergehenden Ansprüche, wobei die erste und/oder die zweite elektronische Schaltungsanordnung (30, 40) eine Messschaltungsanordnung umfasst, die zum Messen eines Maßes konfiguriert ist, das für die Leistung repräsentativ ist, die von einer Last verbraucht wird, die mit der elektrischen Funktion der elektrischen Baugruppe verbunden ist.

9. Basis nach Anspruch 7 und 5, wobei die Messschaltungsanordnung mit dem Mikrocontroller (42) verbunden ist und der Mikrocontroller (42) dazu konfiguriert ist, die Messung über die Kommunikationsschaltungsanordnung (43) zu kommunizieren.

10. Basis nach einem der vorhergehenden Ansprüche, wobei die elektrische Funktion (50) eines der Folgenden umfasst:
eine Schaltfunktion, insbesondere einen Lichtschalter;
eine Buchsenfunktion;
eine Dimmerfunktion;
eine Lüfterbetätigungsfunktion;
eine Jalousien- oder Vorhangbetätigungsfunktion, eine Thermostatfunktion, eine RGB(W)-Steuerungsfunktion.

11. Elektrische Baugruppe zur bündigen Montage in einer Wand zum Erleichtern, Steuern oder Messen der Stromversorgung einer elektrischen Last, wobei die elektrische Baugruppe eine Basis (10, 20) nach einem der vorhergehenden Ansprüche und eine Abdeckung (60) umfasst;
wobei die Rückseite (22) des rückwärtigen Basisteils (20) von der Abdeckung (60) abgewandt ist und die Vorderseite (21) des rückwärtigen Basisteils (20) an der Rückseite (12) des vorderen Basisteils (10) angebracht ist, wobei die Vorderseite (11) des vorderen Basisteils (10) der Abdeckung (60) zugewandt ist.

12. Elektrische Anordnung nach Anspruch 11, ferner umfassend Schnittstellenmittel, die mit der zweiten Schaltungsanordnung verbunden sind, wobei die Schnittstellenmittel durch die Abdeckung (60) zugänglich sind;
wobei die Schnittstellenmittel vorzugsweise eines oder mehrere von Folgendem umfassen:
Eingabemittel wie eine Taste oder einen Sensor;
ein Ausgabemittel wie eine LED oder eine Anzeige; und/oder
wobei die Schnittstellenmittel mit der Leiterplatte (41) verbunden sind, auf der die zweite Schaltungsanordnung angeordnet ist.

13. Elektrische Anordnung nach Anspruch 11 oder 12, wobei die Abdeckung (60) einen Abdeckungsrahmen (62) und ein zentrales Element (64) umfasst, wobei der Abdeckungsrahmen (62) an der Basis (10, 20) um das zentrale Element (64) herum fixierbar ist;
wobei das zentrale Element vorzugsweise eines von Folgendem ist:
ein zentrales Element (64) für eine Steckdose, eine schwenkbare Schalterplatte, eine Drucktaste, ein Drehknopf.

## Revendications

1. Base (10, 20) pour une installation encastrée dans une paroi, pour faciliter, réguler ou mesurer la fourniture d'énergie à une charge électrique, ladite base (10, 20) comprenant une fonction électrique (50) et étant destinée à être au moins partiellement intégrée dans une ouverture dans la paroi, ladite base (10, 20) comprenant une partie de base arrière (20) dotée d'un côté arrière (22) et d'un côté avant (21), et une partie de base avant (10) dotée d'un côté arrière (12) et d'un côté avant (11) ; le côté avant (21) de la partie de base arrière (20) étant fixé à un côté arrière (12) de ladite partie de base avant (10) ;
ladite partie de base arrière (20) étant fournie avec une première circuiterie électronique (30) connectée à la fonction électrique (50) ;
ladite partie de base avant (10) étant fournie avec une seconde circuiterie électronique (40) qui est connectée à ladite première circuiterie électronique (30) ;
la seconde circuiterie électronique (40) étant disposée sur une PCB (41), ladite PCB (41) étant disposée entre la partie de base avant (10) et la partie de base arrière (20) ;
**caractérisé en ce que** la première circuiterie électronique (30) est disposée sur une PCB (31), ladite PCB (31) étant fixée au côté arrière (22) de la partie de base arrière (20) ; et
**en ce que** la fonction électrique (50) comprend un relais (32) disposé dans une cavité (23) fournie dans le côté arrière (22) de la partie de base arrière (20).

2. Base selon la revendication 1, dans laquelle la seconde circuiterie électronique (40) est disposée dans une cavité (13) qui est fournie dans le côté arrière (12) de la partie de base avant (10).

3. Base selon la revendication 1 ou 2, dans laquelle la fonction électrique est une fonction de prise comprenant des bus de contact.

4. Base selon l'une quelconque des revendications précédentes, dans laquelle la première circuiterie électronique comprend une circuiterie de conversion d'énergie (33) configurée pour convertir une première tension présente sur des fils dans la paroi en une seconde tension plus basse afin d'alimenter des composants de la première et/ou seconde circuiterie (30, 40).

5. Base selon l'une quelconque des revendications précédentes, dans laquelle la seconde circuiterie électronique (40) est une circuiterie basse tension alimentée par la seconde tension plus basse.

6. Base selon l'une quelconque des revendications précédentes, dans laquelle la seconde circuiterie électronique comprend un microcontrôleur (42) et une circuiterie de communication (43) connectés à une antenne, le microcontrôleur (42) étant configuré pour traiter des données reçues par la circuiterie de communication (43) et pour configurer ou faire fonctionner la fonction électrique (50) en conséquence, et/ou pour envoyer des données sans fil par l'intermédiaire de ladite circuiterie de communication (43) à un autre ensemble électrique et/ou à une passerelle et/ou à un dispositif mobile.

7. Base selon l'une quelconque des revendications précédentes, dans laquelle ladite cavité est un trou traversant s'étendant du côté arrière au côté avant de la partie de base arrière.

8. Base selon l'une quelconque des revendications précédentes, dans laquelle la première et/ou la seconde circuiterie électronique (30, 40) comprend une circuiterie de mesure configurée pour mesurer une mesure représentant la puissance consommée par une charge connectée à la fonction électrique de l'ensemble électrique.

9. Base selon les revendications 7 et 5, dans laquelle la circuiterie de mesure est connectée au microcontrôleur (42) et le microcontrôleur (42) est configuré pour communiquer ladite mesure par l'intermédiaire de la circuiterie de communication (43).

10. Base selon l'une quelconque des revendications précédentes, dans laquelle la fonction électrique (50) comprend l'une quelconque des fonctions suivantes : une fonction d'interrupteur, en particulier un interrupteur de lampe ; une fonction de prise ; une fonction de variateur ; une fonction d'actionneur de ventilateur ; une fonction d'actionneur de store ou de rideau, une fonction thermostat, une fonction de régulation RVB (B).

11. Ensemble électrique pour une installation encastrée dans une paroi, pour faciliter, réguler ou mesurer la fourniture d'énergie à une charge électrique, ledit ensemble électrique comprenant une base (10, 20) selon l'une quelconque des revendications précédentes, et un couvercle (60) ;
le côté arrière (22) de la partie de base arrière (20) étant à l'opposé dudit couvercle (60) et le côté avant (21) de la partie de base arrière (20) étant fixé au côté arrière (12) de la partie de base avant (10), le côté avant (11) de la partie de base avant (10) faisant face audit couvercle (60).

12. Ensemble électrique selon la revendication 11, comprenant en outre un moyen d'interface connecté à la seconde circuiterie, ledit moyen d'interface étant accessible à travers ledit couvercle (60) ; le moyen d'interface comprenant de préférence un ou plusieurs des moyens suivants : un moyen d'entrée, tel qu'un bouton ou un capteur ; un moyen de sortie tel qu'une DEL ou un affichage ; et/ou le moyen d'interface étant connecté à la PCB (41) sur laquelle est disposée la seconde circuiterie.

13. Ensemble électrique selon la revendication 11 ou 12, dans lequel le couvercle (60) comprend un cadre de couvercle (62) et un organe central (64), ledit cadre de couvercle (62) pouvant être fixé à ladite base (10, 20) autour dudit organe central (64) ; ledit organe central étant de préférence l'un quelconque des éléments suivants : un organe central (64) pour une prise de courant, une plaque d'interrupteur pivotante, un bouton-poussoir, un bouton rotatif.
